# EUROPEAN PATENT APPLICATION

(11) **EP 3 382 086 A1**
(43) Date of publication of application: **03.10.2018**
(21) Application number: 16868002.3
(22) Date of filing: 24.11.2016
(51) Int. Cl.: D06F 37/30, F16J 15/3268, F16J 15/3208

(54) **OIL SEAL INSTALLATION STRUCTURE FOR USE IN WASHING MACHINES, AND WASHING MACHINE**

(30) Priority: 27.11.2015 CN 201510847736
(71) Applicant: Qingdao Haier Drum Washing Machine Co., Ltd., Shandong 266101 (CN)
(72) Inventor: ZHANG, Chunfeng, Qingdao Shandong 266101 (CN); ZHANG, Tao, Qingdao Shandong 266101 (CN); SUN, Yunpeng, Qingdao Shandong 266101 (CN)
(74) Representative: Gevers Patents
(86) International application number: PCT/CN2016/107035
(87) International publication number: WO 2017/088779

(57) **Abstract**

Provided are an oil seal installation structure for washing machines and a washing machine, the oil seal installation structure for washing machines includes at least three oil seals (3, 4, 5) provided on a main shaft of the washing machine at intervals, the oil seals (3, 4, 5) are disposed between a rear portion of an inner tub of the washing machine and a first bearing (2) closing to the inner tub. Seal lips of the oil seals (3, 5) disposed at both ends face a sealing region (6) of the main shaft, and the seal lip of at least one oil seal (4) disposed in the middle faces away from the sealing region (6) of the main shaft. The oil seal installation structure for washing machines has a good water-proof and dust-proof effect, and is simple in structure, which leads to a longer life service and a better reliability for washing machines.

## Description

### TECHNICAL FIELD

The present disclosure relates to a field of a washing machine and parts of the washing machine, and relates to, for example, an oil seal installation structure for washing machines and a washing machine.

### BACKGROUND

The washing machine is a commonly used household appliance. For example, for a commercial washing machine, the operating environment of which is harsher than that of a domestic washing machine, and the operating frequency of which is higher than that of the domestic washing machine. Therefore, the commercial washing machine is required to have a higher operating stability and a longer life. During the assembly process of the washing machine, the oil seal needs to be in close contact with a main shaft of the washing machine. Once the surface of the main shaft is exposed to dust or debris, the foreign matter will rub between the main shaft and a lip of the oil seal, resulting in failure of the lip of the oil seal, and eventually, the washing water cannot be effectively isolated, which affects the life of the washing machine. During the normal operation of the washing machine, the lip of the oil seal will fail due to wear, which results in that the washing water enters a bearing chamber and that failures of the bearing occur so as to reduce the reliability of the washing machine. Therefore, a proper assembly and use of the oil seal is particularly important.

An oil seal combination structure of a washing machine in a related art includes a plane oil seal and three skeleton oil seals. A plane oil seal is arranged around the main shaft of the washing machine, and a sealing seat is arranged on a rear plate of the outer tub of the washing machine around the main shaft, and is fixed on a bearing seat. Three mutually spaced skeleton oil seals are fixed on the sealing seat. An oil chamber and a sink are respectively formed at opposite sides between the sealing seat and the shaft sleeve, the bearing seat and the rear plate of the outer tub. An oil filling hole of the oil chamber is provided at one side of the bearing seat, and the drain hole of the tank is provided at the other side on the bearing seat. The purpose of improving the waterproof performance is achieved through the above-mentioned complicated structure formed by a plurality of oil seals and other components. The defects of the oil seal structure are as follows: for a commercial washing machine that is operated under a more severe environment, the waterproof and dustproof effects are still poor, and the stability of the washing machine and the life of the washing machine will be reduced in a long term; and the structure is too complicated, the manufacturing cost is too high, and it is difficult to realize its mass production.

### SUMMARY

The present disclosure provides an oil seal installation structure for washing machines and a washing machine. The oil seal installation structure for washing machines has a well waterproof and dustproof effect, and has a simple structure. It can satisfy a harsh operating environment in which a commercial washing machine is operated, and the operating stability of the washing machine is enhanced. As a result, the washing machine has a longer life and a higher stability.

In a first aspect, an embodiment of the present disclosure provides an oil seal installation structure for washing machines, which includes at least three oil seals provided on a main shaft of the washing machine at intervals, the at least three oil seals are disposed positioned between a rear portion of an inner tub of the washing machine and a first bearing closing to the inner tub. Seal lips of the oil seals disposed at both ends face to a sealing region of the main shaft, and the seal lip of at least one oil seal disposed in the middle faces away from the sealing region of the main shaft.

As an embodiment of the present disclosure, the oil seal installation structure for washing machines includes a first oil seal closing to the first bearing, a third oil seal closing to a tripod disposed at a rear portion of the inner tub of the washing machine and a second oil seal disposed in the middle. As an embodiment of the present disclosure, the first oil seal disposed at the first bearing is attached to the first bearing.

As an embodiment of the present disclosure, the second oil seal and the third oil seal form a drainage space for blocking washing water, and the washing water is drained via a drain hole in a shaft sleeve of the main shaft.

As an embodiment of the present disclosure, the seal lip of the second oil seal faces away from the sealing region of the main shaft for preventing residual washing water inside the drainage space from penetrating into a safety cavity formed by the first oil seal and the second oil seal.

As an embodiment of the present disclosure, the oil seal is a skeleton oil seal.

In a second aspect, the present disclosure provides a washing machine, which includes the above-mentioned oil seal installation structure for a washing machine.

As an embodiment of the present disclosure, the washing machine includes a main shaft of a washing machine and a first bearing and a second bearing oppositely provided on the main shaft, a sealing region is formed between the first bearing and the second bearing.

As an embodiment of the present disclosure, a shaft sleeve is sleeved on the main shaft, a drain hole is arranged on the shaft sleeve, and the oil seal installation structure for a washing machine includes three oil seals disposed on the shaft sleeve at intervals.

As an embodiment of the present disclosure, a tripod is provided at a rear portion of an inner tub of the washing machine, and the three oil seals are provided between the tripod and the first bearing.

The oil seal installation structure for washing machines provided by the present disclosure includes a first oil seal closing to the first bearing, a third oil seal closing to a tripod and a second oil seal disposed in the middle. Among them, the second oil seal and the third oil seal form a drainage space for blocking the washing water, and the seal lip of the second oil seal faces away from the sealing region of the main shaft (i.e. a reverse installation) for preventing residual washing water inside the drainage space formed by the second and third oil seals from penetrating into a safety cavity formed by the first oil seal and the second oil seal. The oil seal installation structure for washing machines has good water-proof and dust-proof effects, and is simple in structure, which leads to a longer life and a better reliability for washing machines. The requirements of a harsh environment under which a commercial washing machine runs and improvements on operating stability of a washing machine can be satisfied.

The washing machine of the present disclosure includes the above-mentioned oil seal installation structure. Due to the adoption of a novel oil seal installation structure, the life of the washing machine becomes longer, and the stability thereof is higher.

### BRIEF DESCRIPTION OF DRAWINGS

FIG. 1 is a structural diagram of a washing machine in Embodiment Three of the present disclosure; and
FIG. 2 is a partial enlarged view of part A in FIG. 1.

### Description of the symbols

1: Tripod; 2, First bearing; 3, First oil seal; 4, Second oil seal; 5, Third oil seal; 6. Sealing region; 7, Second bearing; 8: Shaft Sleeve

### DETAILED DESCRIPTION

The technical solution of the present disclosure will be described below with reference to drawings and through alternative embodiments. The features in the embodiments and the embodiments may be combined with each other arbitrarily without conflicts.

### Embodiment One:

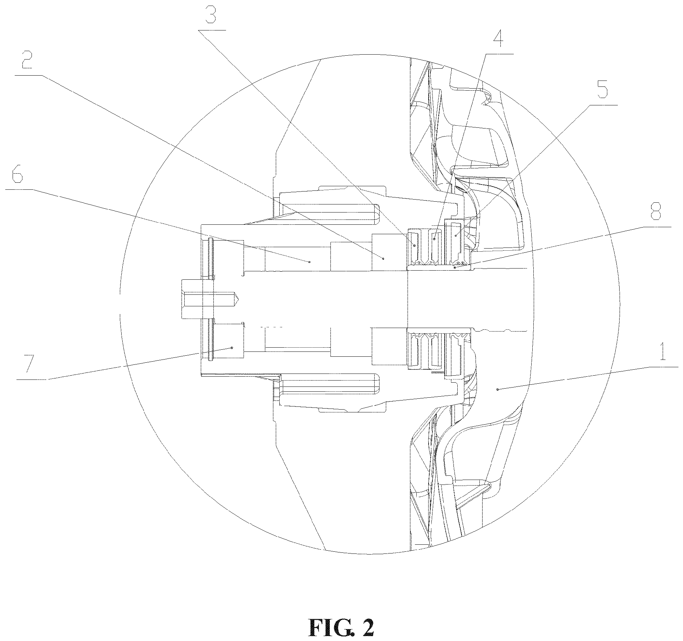

The embodiment of the present disclosure provides an oil seal installation structure for a washing machine. As shown in FIG. 2, the oil seal installation structure for the washing machine includes three oil seals disposed on a shaft sleeve 8 at intervals, and the three oil seals are located between a tripod 1 and a first bearing 2.

In one embodiment, the three oil seals are a first oil seal 3 closing to the first bearing 2, a third oil seal 5 closing to a tripod 1 disposed at a rear portion of the inner tub of the washing machine and a second oil seal 4 in the middle. Seal lips of the first oil seal 3 and the third oil seal 5 face a sealing region 6 (i.e. a forward installation) of the main shaft, and the seal lip of the second oil seal 5 faces away from the sealing region 6 (i.e. a reverse installation) of the main shaft.

The second oil seal 4 and the third oil seal 5 form a drainage space for blocking washing water, and the washing water is drained via a drain hole in a shaft sleeve of the main shaft. The first oil seal 3 and the second oil seal 4 can form a safety cavity.

In this embodiment, for improving the waterproof and dustproof effect of the oil seal, the oil seal can be a skeleton oil seal.

In normal uses, the seal lip and the spring ring of the third oil seal 5 will prevent external washing water and debris from entering the sealing region 6, but after a long time operation, the seal lip and the spring ring on the third oil seal 5 may fail (for example, damage to the lip or the loosening of the spring occurs). In this case, debris such as scraps of paper are effectively blocked, but the washing water enters the drainage space formed by the second oil seal 4 and the third oil seal 5 through the damaged surface of the lip of the third oil seal 5. Most of the washing water that enters the drainage space is drained through the drain hole on the shaft sleeve 8, and a very small amount of water is blocked by the second oil seal 4. As the washing machine is used for a longer time, the reduction of grease inside the second oil seal 4 and the wear of the lip rubber cause an extremely amount of washing water to penetrate into the safety cavity formed by the first oil seal 3 and the second oil seal 4. Under the final obstruction of the first oil seal 3, it is difficult to enter the sealing region 6, thereby achieving a better waterproof and dustproof effect.

In this embodiment, the seal lip of the second oil seal 4 faces away from the sealing region 6 of the main shaft (i.e., a reverse installation): firstly, the washing water in the drainage space can be effectively blocked; secondly, when the main shaft is rotated, the grease in the cavity of the second oil seal 4 forms an oil film on the main shaft and the lip of the second oil seal 4. When the oil film does not contact the washing water or the impurities, it will effectively reduce the wear of the lip and greatly improve the safety of the bearing sealing cavity. Thirdly, a close cooperation of the oil seal 4 and the bearing chamber is ensured in the assembly process, thereby avoiding the hidden risks such as the inclination of the assembly tilt and the outward movement of the springs. Therefore, the installation method can solve some problems exist in the oil seal installation structure in the related art.

In addition, the first oil seal 3 disposed at the first bearing 2 is attached to the first bearing 2. At the time of installing the inner tub and the main shaft of the washing machine, it is unavoidable that some dust, gravel or other debris will be attached on the shaft. Since the first oil seal 3 is attached to the first bearing 2, original dust can be effectively blocked so as to be present outside the sealing region 6 at the time of mounting. To a certain extent, the production yield of the finished product can be improved, thereby reducing the possibility of secondary damages occurring when the washing machine is repaired.

### Embodiment Two:

The present disclosure provides an oil seal installation structure for a washing machine. The oil seal installation structure of the washing machine is basically the same as the structure described in Embodiment One. The difference lies in that the oil seal is not limited to a skeleton oil seal, and can also be determined according to the actual usage requirements. It just suffices that the basic function of the oil seal is fulfilled. In addition, four, five or more oil seals can be disposed, the oil seals at both ends are installed forward, and one oil seal in the middle is installed reversely so as to achieve a better waterproof and dustproof effect. They can be disposed according to the production costs and the specific difficulty for overcoming a certain assembly and process.

### Embodiment Three:

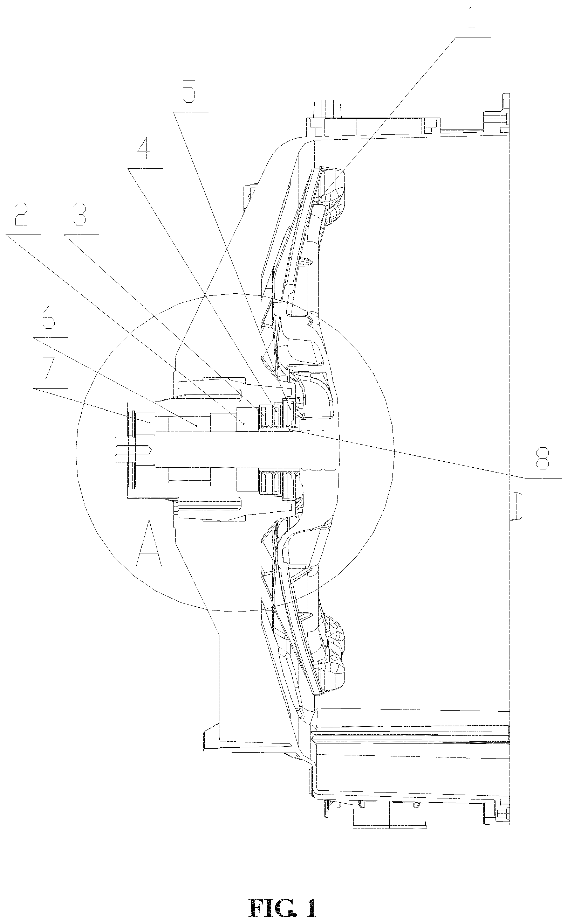

The present embodiment discloses a drum washing machine. As shown in FIG. 1, the drum washing machine includes an inner tub (not shown in the figure), a tripod 1 provided at the rear of the inner tub, a main shaft connected with the inner tub, a shaft sleeve 8 sleeved on the main shaft, a first bearing 2 and a second bearing 7 oppositely provided on the main shaft, and the oil seal installation structure as described in Embodiment One.

A sealing region 6 is formed between the first bearing 2 and the second bearing 7. It should be ensured that the washing water cannot enter the sealing region 6. Once the washing water enters, the main shaft and the bearing may be rusted, and at the same time, other rotating devices may be damaged; and a drain hole is provided in the shaft sleeve 8. If a large amount of washing water enters the oil seal, it can be drained through the drain hole to prevent the washing water from damaging other components.

The installation method is as follows: the first oil seal 3 closely fits with the first bearing 2, the second oil seal 4 is disposed at an intermediate position, and the third oil seal 5 is disposed closing to the tripod 1. In fact, three spaced oil seals are disposed between the tripod 1 and the first bearing 2. The first oil seal 3 and the third oil seal 5 are installed in a forward direction, and the second oil seal 4 is installed in a reverse direction.

The second oil seal 4 and the third oil seal 5 form a drainage space that can block the washing water. A drain hole is arranged on the shaft sleeve at the drainage space to ensure that the washing water can be drained through the drainage hole. The first oil seal 3 and the second oil seal 4 can form a safety cavity.

In this embodiment, for example, regarding the case in which a drum commercial washing machine is operated under a harsher environment and is used more frequently compared with the ordinary washing machine, the above oil seal combination structure is needed to improve the operating stability of the washing machine and prolong the life of the washing machine just for avoiding frequent maintenance and damage problems.

In this embodiment, since the above oil seal combination is installed, the problems of washing machine (e.g. a commercial washing machine) such as the frequent maintenance and the short life in the related art can be solved. The solution is as follows: during uses, the seal lip and the spring ring of the third oil seal 5 will prevent the external washing water and debris from entering the sealing region 6. However, after a long time operation, the seal lip and the spring ring on the third oil seal 5 may fail. At this time, the debris such as the lint will be effectively blocked, but the washing water enters the drainage space formed by the second oil seal 4 and the third oil seal 5 through the damaged surface of the lip of the third oil seal 5. Most of the washing water entering the drainage space is drained through the drain hole on the shaft sleeve 8, and a very small amount of water will be blocked by the second oil seal 4. As the washing machine is used for a longer time, the reduction of the grease in the second oil seal 4 and the wear of the rubber in the lip will cause the washing water to penetrate into the safety cavity formed by the first oil seal 3 and the second oil seal 4. Under the final obstruction of the first oil seal 3, it is difficult to enter the sealing region 6, thereby achieving a better waterproof and dustproof effect. The reverse installation mode of the second oil seal 4 has the following effects: firstly, the washing water in the drainage space is effectively blocked; secondly, when the main shaft rotates, the grease in the cavity of the second oil seal 4 will be in the main shaft and the lip of the second oil seal 4 to form an oil film, when the oil film does not contact the washing water or impurities, it will effectively reduce the wear of the lip, greatly improving the safety of the bearing sealing chamber; and thirdly, it is guaranteed in the assembly process that the second oil seal 4 is tightly fitted with the bearing chamber so as to avoid hidden risks such as inclination of the assembly and outward movement of the spring. Therefore, the installation method solves some problems in the oil seal installation structure in the related art.

The above structure for the drum washing machine is only an optional structure, and the oil seal installation structure can also be applied to other types of washing machines, depending on the usage requirements.

Finally, it should also be noted that, in this text, relational terms such as first and second, etc., are only used to distinguish one entity or operation from another entity or operation, and it is not necessarily required or implied that there is any such actual relationship or order between the entities or the operations. Moreover, the terms "include", "including" or any other variations are intended to cover a non-exclusive inclusion so that a process, method, article, or apparatus that includes a list of elements not only includes those elements but also includes those that are not explicitly listed or the elements inherent to such processes, methods, articles, or equipment. In the absence of any more limitation, an element defined by a sentence "includes a..." does not exclude that other identical elements exist in the process, the method, the article, or the device that includes the element.

The above embodiments are given with reference to the drawings, and are merely optional solutions for achieving the present disclosure rather than limit the same. Any modification to the optional embodiment of the present disclosure or equivalent replacement of some technical features shall be within the scope of the requested technical solution of the present disclosure.

### Industrial applicability

The embodiments of the present disclosure provide an oil seal installation structure for washing machines and a washing machine. The oil seal installation structure for washing machines has a good waterproof and dustproof effect and has a simple structure. It can satisfy a harsh operating environment in which a commercial washing machine is operated and enhance the running stability of the washing machine. As a result, the washing machine has a longer life and a higher stability.

## Claims

1. An oil seal installation structure for a washing machine, comprising: at least three oil seals provided on a main shaft of the washing machine at intervals, wherein the at least three oil seals are disposed between a rear portion of an inner tub of the washing machine and a first bearing (2) closing to the inner tub; and
wherein seal lips of oil seals disposed at both ends face to a sealing region (6) of the main shaft, and a seal lip of at least one oil seal disposed in the middle faces away from the sealing region (6) of the main shaft.

2. The oil seal installation structure for a washing machine according to claim 1, comprising: a first oil seal (3) closing to the first bearing (2), a third oil seal (5) closing to a tripod (1) disposed at a rear portion of the inner tub of the washing machine and a second oil seal (4) disposed in the middle.

3. The oil seal installation structure for a washing machine according to claim 2, wherein the first oil seal (3) disposed at the first bearing (2) is attached to the first bearing (2).

4. The oil seal installation structure for a washing machine according to claim 2 or 3, wherein the second oil seal (4) and the third oil seal (5) form a drainage space for blocking washing water, and the washing water is drained via a drain hole in a shaft sleeve of the main shaft.

5. The oil seal installation structure for a washing machine according to claim 4, wherein the seal lip of the second oil seal (4) faces away from the sealing region (6) of the main shaft for preventing residual washing water inside the drainage space from penetrating into a safety cavity formed by the first oil seal (3) and the second oil seal (4).

6. The oil seal installation structure for a washing machine according to claim 1 or 3, wherein the oil seal is a skeleton oil seal.

7. A washing machine, comprising an oil seal installation structure for a washing machine according to any one of claims 1 to 6.

8. The washing machine according to claim 7, wherein the washing machine comprises a main shaft of the washing machine and a first bearing (2) and a second bearing (7) oppositely provided on the main shaft, and wherein a sealing region (6) is formed between the first bearing (2) and the second bearing (7).

9. The washing machine according to claim 8, wherein a shaft sleeve (8) is sleeved on the main shaft, a drain hole is arranged on the shaft sleeve (8), and wherein the oil seal installation structure for a washing machine comprises three oil seals disposed on the shaft sleeve (8) at intervals.

10. The washing machine according to claim 9, wherein a tripod (1) is provided at a rear portion of an inner tub of the washing machine, and the three oil seals are disposed between the tripod (1) and the first bearing (2).
